Europäisches Patentamt

European Patent Office

Office européen des brevets

(19)

(11) Publication number: **0 134 257**
**B1**

(12) # EUROPEAN PATENT SPECIFICATION

(45) Date of publication of patent specification: **13.05.87**

(51) Int. Cl.⁴: **A 23 F 3/34,** A 23 L 1/28,
A 61 K 35/84

(21) Application number: **83107580.9**

(22) Date of filing: **02.08.83**

(54) **Method for making a sanitary drink.**

(43) Date of publication of application:
**20.03.85 Bulletin 85/12**

(45) Publication of the grant of the patent:
**13.05.87 Bulletin 87/20**

(84) Designated Contracting States:
**FR GB IT**

(56) References cited:
**FR-A-2 163 447**

**PATENTS ABSTRACTS OF JAPAN, vol. 4, no.
186 (C-36)668r, 20th December 1980**

**PATENTS ABSTRACTS OF JAPAN, vol. 6, no.
73 (C-101) 951r, 8th May 1982**

**PATENTS ABSTRACTS OF JAPAN, vol. 6, no.
257 (C-140)1135r, 16th December 1982**

**PATENTS ABSTRACTS OF JAPAN, vol. 6, no.
40 (C-94)918r, 12th March 1982**

**PATENTS ABSTRACTS OF JAPAN, vol. 7, no.
56 (C-155)1201r, 8th March 1983**

(73) Proprietor: **Matoba, Tamiji
59, Tomeicho 5-chome Chikusa-ku
Nagoya-shi 464 (JP)**

(72) Inventor: **Shino, Kunihiko
Sakae-cho 17
Nerima-ku Tokyo 176 (JP)**
Inventor: **Matoba, Tamiji
59 Tomeicho 5-chome Chikusa-ku
Nagoya-shi 464 (JP)**

(74) Representative: **Goddar, Heinz J., Dr. et al
FORRESTER & BOEHMERT Widenmayerstrasse
4/I
D-8000 München 22 (DE)**

Courier Press, Leamington Spa, England.

## Description

### Background of the invention
### Field of the invention

This invention relates to sanitary drinks and more particularly, to a method for making a sanitary drink of the type which comprises extracts of a certain type of fungi of basidiomycetes belonging to the family Polyporaceae and Indian hydrangea tea.

### Prior art

In most of known healthful or sanitary foods, it is usual to place stress on the pharmaceutical effect of effective ingredients but to rather despise the taste of a food itself. We have made extensive studies to utilize effective components of a certain type of fungi belonging to the family Polyporaceae and Indian hydrangea tea while taking into account the problem of taste of food.

### Summary of the invention

It is accordingly an object of the present invention to provide a method for making a sanitary drink which comprises extracts of fungi of basidiomycetes belonging to the family Polyporaceae and Indian hydrangea tea.

It is another object of the invention to provide a sanitary drink which comprises an extract from fungi of basidiomycetes belonging to the family Polyporaceae and containing germanium joined to an organic compound (hereinafter referred to as organic germanium compound or substance) and polysaccharides and an extract from Indian hydrangea tea which contains an organic germanium compound.

The above objects can be achieved, according to the present invention, by a method for making a sanitary drink which comprises mixing a mushroom or fungi of basidiomycetes belonging to the family Polyporaceae or a dried product thereof and Indian hydrangea tea or its dried product, adding water in an amount of several times to several tens times by weight greater than that of the mixture, subjecting the mixture to the extraction treatment at a temperature of 50 to 150°C for a time sufficient for the extraction, adding an organic acid in an amount sufficient to render the mixture acidic, allowing the mixture to stand at a temperature higher than the freezing point thereof but lower than a temperature at which the extract decays, separating the resulting insoluble matters from the mixture, and thermally sterilizing the resulting filtrate. The drink obtained according to the invention can be served as it is or after concentration for drinking purpose with or without addition of sweetenings.

### Detailed description of the invention

In the practice of the invention, the mushroom, i.e. fungi of basidiomycetes, belonging to the family Polyporaceae is that which contains polysaccharides and organic germanium substances which are scientifically proved as showing various physiological activities including anti-cancer action on animals including human beings. Typical of the fungi are, for example, Coriolus versicolor (Fr.) Quel., and Ganoderma lucidum (Fr.) Karst.

In general, polysaccharides which stimulate the immune system of living body and exhibit various physiological activities including the anti-cancer action include polysaccharides such as a hemicellulose fraction isolated from various plants, bamboo grasses, fungi, bagasse, lichen and the like, and lipopolysaccharides such as from yeasts and bacteria. However, these polysaccharides show their effect only when injected intraperitoneally or intravenously, so that it is difficult to employ them as food. The polysaccharide such as from Coriolus versicolor or Ganoderma lucidum has the advantage of exhibiting the efficacy even through oral administration. Additionally, these polysaccharides have no toxicity irrespective of administration route and can thus be utilized effectively as a sanitary food.

The Indian hydrangea tea belonging to the family Saxifragaceae is widely known not only as a remedy effective in curing diabetes, but also as a starting material for the tea of heaven which is drunk at the celebration of an anniversary of Buddha's birth on April 8. This tea is from one of the plants which contains organic germanium substance or substances. The organic germanium substance will induce interferon in blood even when dosed orally, activating macrophages and NK cells to produce the anti-pernicious neoplasm effect. Moreover, the organic germanium substance serves to inactivate a certain type of potential protein kaines of cancer cells.

In Japan which is going towards a highly advanced age community as will never have been experienced in any country in Europe, the aged who wish to work healthfully to the death or who are given up by their physician will increase more or more. Further, there is the fact that more than 50% of the local finance is occupied by the medical expenses and hence it is necessary to save such expenses. In this sense, provision of a tasteful sanitary drink which has the effective physiological activities of polysaccharides and organic germanium substance of Coliorus versicolor or Ganoderma lucidum and also of organic germanium substance of the Indian hydrangea tea whose efficacy against living body have been scientifically or traditionally proved is considered to coincide with the social needs.

We have made extensive studies on sanitary drinks and succeeded in developing a tasteful sanitary drink which is obtained by mixing fungi of basidiomycetes belonging to the family Polyporaceae and Indian hydrangea tea, subjecting the mixture to the specific extraction treatment, adding an organic acid, and, optionally, sweetening such as honey, unrefined sugar and the like. The mixing ratio of the fungi and the Indian hydrangea tea is generally in the range of 3:1 to 1:3, preferably 1:1 on the weight basis.

The mixture of the fungi and the Indian hydrangea tea is extracted by adding thereto water in an amount of several to several tens times as great as that of the mixture and heated at a temperature of from 50 to 150°C for several minutes or more.

In general, the amount of water is 5 to 20 times by weight that of the mixture. The resulting extract is found to contain polysaccharides and organic germanium substances in abundance. To the extract is added an organic acid which is harmless to human beings and includes, for example, citric acid, 1-ascorbic acid, succinic acid or the like. The organic acid is added in an amount of 0.1 to 2 wt% of the total composition or to such a level that the extraction system is adjusted to a pH range below 7, preferably below 5. Then, the extract system is agitated and allowed to stand at a low temperature ranging from 0 to 10, preferably about 1 to 3°C for a long time of over 10 hours or overnight, by which insoluble matter is permitted to precipitate. The insoluble matter is organic compounds or substances including proteins and can be readily removed from the extract by a centrifugation using a Sharpless centrifugal separator, for example, at 8000 to 20000 r.p.m. The resulting glossy reddish, clear yellowish brown extract may be charged into a suitable container such as a glass bottle as it is or after concentration to a suitable level of concentration by a concentrator and thermally sterilized as usual to give a drink product.

The present invention is particularly described by way of the following examples.

Example 1

1 kg of an air-dried product of Coriolus versicolor and 1 kg of an air-dried product of Indian hydrangea tea were mixed together, to which was added 10 liters of water, followed by heating at 60°C for 10 hours while agitating. Thereafter, the mixture was filtered by means of a filter cloth to separate into an extract and a residue. As a result, there was obtained 7 liters of the extract. The residue was washed with 3 liters of water and the washing and the extract were combined together to make a total volume of 10 liters. To the 10 liters extract was added 50 g of a powder of citric acid, which was agitated for dissolution, followed by allowing to stand overnight in an ice room of 1°C thereby permitting insoluble matters to precipitate and the extract to age. The extract was separated by a centrifugal separator to remove the insoluble matters therefrom. This 10 liters extract was charged into 10 brown bottles each having a volume of 1 liter and thermally sterilized at 85°C for 30 minute and tightly stoppered to obtain a bottled drink.

Example 2

1.5 kg of an air-dried product of Ganoderma lucidum and 0.5 kg of an air-dried product of Indian hydrangea tea were mixed to which was added 30 liters of water, followed by heating to 80°C for 3 hours while agitating. Then, the mixture was separated by means of a filter cloth into an extract and a residue to obtain 27 liters of the extract. The residue was washed with 3 liters of water and the resulting washing and the extract were combined together to make a total volume of 30 liters. The extract was concentrated to 1/3 in volume by means of a concentrator, to which were added 20 g of 1-arcobic acid powder, 20 g of citric acid powder and 20 g of succinic acid powder and agitated for dissolution. The resulting solution was allowed to stand over day and night in an ice chamber of 3°C, thereby permitting insoluble matters to precipitate and the extract to age. The extract system was subjected to the separation by means of a centrifugal separation to remove the insoluble matters therefrom. The resulting extract with a volume of 10 liters was admixed with 2 kg of honey under agitation to obtain a solution. This solution was charged into 900 cc bottles, thermally sterilized at 90°C for 15 minutes, and each bottle was tightly stoppered to obtain a bottled product.

**Claims**

1. A method for the preparation of a beverage by extraction of basidiomycetes fungus of the family Polyporaceae which comprises mixing said fungus or a dried product thereof and Indian hydrangea tea or a dried product thereof, adding water in an amount of several to several ten times by weight greater than that of the mixture, subjecting the mixture to the extraction treatment at a temperature of 50 to 150°C for a time sufficient for the extraction, adding an organic acid harmless to human beings in an amount sufficient to render the system acidic, allowing the system to stand at a temperature higher than the freezing point thereof but lower than a temperature at which the extract decays, separating the resulting insoluble matter from the system, and thermally sterilizing the resulting filtrate.

2. A method according to claim 1, wherein said fungus and said Indian hydrangea tea are mixed in a ratio of 3:1 to 1:3 on the weight basis.

3. A method according to claim 1 or 2, wherein said fungus is Coriolus versicolor or Ganoderma lucidum.

4. A method according to one of the preceding claims, wherein said water is added in an amount of 5 to 20 times the weight of the mixture to be extracted.

5. A method according to one of the preceding claims, wherein said organic acid is harmless against human beings and is added in an amount of 0.1 to 2 wt% of the total composition so that the pH of the system is in the range below 7.

6. A method according to one of the preceding claims, wherein the system is allowed to stand at a temperature of 0 to 10°C for over 10 hours.

7. A method according to one of the preceding claims, wherein a sweetening agent is added to the prepared extract.

8. A beverage obtainable by the method of claim 1.

## Patentansprüche

1. Verfahren zur Herstellung eines Getränks durch Extraktion von Basidiomycetes fungus aus der Familie Polyporaceae, dadurch gekennzeichnet, daß besagter Pilz oder ein getrocknetes Produkt daraus und indischer Hydrangeatee oder ein getrocknetes Produkt daraus gemischt werden, daß Wasser in einer Menge von einigen bis einigen zehn Malen mehr an Gewicht als die Mischung zugegeben wird, daß die Mischung der Extraktionsbehandlung bei einer Temperatur von 50 bis 150°C für eine für die Extraktion hinreichende Zeit unterworfen wird, daß eine für Menschen unschädliche organische Säure in einer Menge zugefügt iwrd, die hinreicht, um das System sauer zu machen, daß das System bei einer Temperatur stehengelassen wird, die höher ist als der Gefrierpunkt desselben, aber niedriger als eine Temperatur, bei der sich der Extrakt zersetzt, daß sich die daraus ergebende unlösliche Materie vom System abgetrennt wird, und daß das resultierende Filtrat thermisch sterilisiert wird.

2. Verfahren nach Anspruch 1, dadurch gekennzeichnet, daß besagter Pilz und besagter indischer Hydrangeatee in einem Gewichtsverhältnis von 3:1 bis 1:3 gemischt werden.

3. Verfahren nach Anspruch 1 oder 2, dadurch gekennzeichnet, daß besagter Pilz Coriolus versicolor oder Ganoderma lucidum ist.

4. Verfahren nach einem der vorangehenden Ansprüche, dadurch gekennzeichnet, daß besagtes Wasser in einer Menge von 5 bis 20 Mal des Gewichts der zu extrahierenden Mischung zugegeben wird.

5. Verfahren nach einem der vorangehenden Ansprüche, dadurch gekennzeichnet, daß besagte organische Säure für Menschen unschädlich ist und in einer Menge von 0,1 bis 2 Gew.-% der Gesamtzusammensetzung hinzugefügt wird, so daß der pH-Wert des Systems im Bereich unterhalb 7 liegt.

6. Verfahren nach einem der vorangehenden Ansprüche, dadurch gekennzeichnet, daß das System bei einer Temperatur von 0 bis 10°C für mehr als 10 Stunden stehengelassen wird.

7. Verfahren nach einem der vorangehenden Ansprüche, dadurch gekennzeichnet, daß dem hergestellten Extrakt ein Süßstoff zugesetzt wird.

8. Getränk, das nach dem Verfahren von Anspruch 1 herstellbar ist.

## Revendications

1. Procédé de préparation d'une boisson par extraction de champignons basidiomycetes de la famille Polyporaceae, selon lequel on mélange ledit champignon, ou un dérivé séché de celui-ci, et un thé hydrangea indien ou un dérivé séché de celui-ci, on ajoute de l'eau à raison en poids de plusieurs fois à plusieurs dizaines de fois le poids du mélange, on soumet le mélange à un traitement d'extraction, à une température de 50 à 150°C, pendant un temps suffisant pour l'extraction, on ajoute un acide organique, inoffensif pour les êtres humains, en quantité suffisante pour rendre acide le système, on laisse reposer le système à une température supérieure à sont point de congélation, mais inférieure à une température à laquelle l'extrait se décompose, on sépare du système la matière insoluble résultante et on stérilise à la chaleur le filtrat résultant.

2. Procédé selon la revendication 1, dans lequel ledit champignon et le thé hydrangea indien sont mélangés dans un rapport en poids de 3/1 à 1/3.

3. Procédé selon la revendication 1 ou 2, dans lequel ledit champignon est Coriolus versicolor ou Ganoderma lucidum.

4. Procédé selon l'une des revendications précédentes, dans lequel on ajoute l'eau en proportions de 5 à 20 fois le poids du mélange à extraire.

5. Procédé selon l'une des revendications précédentes, dans lequel ledit acide organique est inoffensif pour les êtres humains et on l'ajoute en proportion de 0,1 à 2% en poids de la composition totale, de manière que le pH du système soit dans la zone inférieure à 7.

6. Procédé selon l'une des revendications précédentes, dans lequel on laisse le système au repos à une température de 0 à 10°C pendant plus de 10 heures.

7. Procédé selon l'une des revendications précédentes, dans lequel on ajoute un adoucissant à l'extrait préparé.

8. Boisson obtenue par le procédé selon la revendication 1.